Europäisches Patentamt

European Patent Office

Office européen des brevets

(19)

(11) Veröffentlichungsnummer : **0 412 309 B1**

(12) **EUROPÄISCHE PATENTSCHRIFT**

(45) Veröffentlichungstag der Patentschrift :
**29.09.93 Patentblatt 93/39**

(21) Anmeldenummer : **90113330.6**

(22) Anmeldetag : **12.07.90**

(51) Int. Cl.⁵ : **G01C 19/72**

(54) **Faserkreisel vom Sagnac-Typ.**

(30) Priorität : **09.08.89 DE 3926312**

(43) Veröffentlichungstag der Anmeldung :
**13.02.91 Patentblatt 91/07**

(45) Bekanntmachung des Hinweises auf die
Patenterteilung :
**29.09.93 Patentblatt 93/39**

(84) Benannte Vertragsstaaten :
**DE FR GB IT**

(56) Entgegenhaltungen :
**US-A- 4 283 144**
**US-A- 4 440 498**
**US-A- 4 479 715**

(56) Entgegenhaltungen :
**PATENT ABSTRACTS OF JAPAN, Band 10, Nr.**
**351 (P-520)[2407], 27. November 1986; & JP-**
**A-61 151 415 (HITACHI CAB. LTD) 10-07-1986**

(73) Patentinhaber : **Deutsche Aerospace AG**
**Patente**
**D-81663 München (DE)**

(72) Erfinder : **Bühler, Wolfhardt**
**Feldbergstrasse 84**
**D-8000 München 82 (DE)**
Erfinder : **Poisel, Hans, Dr.**
**Neustädter Strasse 6**
**D-8060 Dachau (DE)**
Erfinder : **Trommer, Gert, Dr.**
**Conollystrasse 16**
**D-8000 München 40 (DE)**

EP 0 412 309 B1

## Beschreibung

Die Erfindung bezieht sich auf einen Faserkreisel gemäß dem Oberbegriff des Patentanspruches 1.

Bei derartigen Faserkreiseln, bei denen der Sagnac-Effekt ausgenutzt wird, wird Licht einer einzigen Lichtquelle, üblicherweise mit Hilfe eines Richtkopplers, in die beiden Enden einer Faserspule aus einem Lichtleiter eingespeist, so daß das Licht den Lichtleiter im und entgegen dem Uhrzeigersinn durchläuft. Die aus den Enden der Faserspule austretenden Lichtanteile interferieren in dem Koppelbereich des Richtkopplers miteinander, wodurch Phasenunterschiede in Amplitudenunterschiede transformiert werden. Das resultierende Interferenz-Signal wird mit einer Empfängeranordnung aufgenommen. Die Ausgangssignale der Empfänger sind abhängig von der Sagnac-Phase, diese ist wiederum direkt proportional der Drehrate des Faserkreisels, so daß aus den Ausgangssignalen der Empfänger die Drehrate des Faserkreisels unmittelbar bestimmt werden kann.

Ein Beispiel für einen solchen Faserkreisel gibt die US-PS 4 440 498. Der dort verwendete Richtkoppler ist ein Sechstor bezüglich seiner optischen Ein- und Ausgänge und wird allgemein als (3 x 3)-Koppler bezeichnet. Der Richtkoppler wird z.B. durch Verschmelzen dreier Monomode-Fasern hergestellt, so daß zu beiden Seiten des den Koppelbereich bildenden Schmelzbereiches jeweils drei Ein/Ausgänge entstehen. Das vorzugsweise unpolarisierte und in seiner Frequenz breitbandige Licht der Lichtquelle wird einem Tor des Richtkopplers zugeführt und im Koppelbereich auf zwei Tore auf der anderen Seite des Richtkopplers gleichmäßig aufgeteilt, an die jeweils ein Ende der Faserspule angeschlossen ist. Das Interferenz-Licht wird zu zwei Toren auf seiten der Lichtquelle geführt, die symmetrisch zu dem mit der Lichtquelle verbundenen Tor liegen und an die jeweils eine Empfangsdiode angeschlossen ist. Das sechste Tor des Richtkopplers auf seiten der Faserspule kann z.B. an eine Überwachungsschaltung angeschlossen werden, mit der die zeitliche Variation der Lichtintensität der Lichtquelle gemessen und bei der Bestimmung der Drehrate berücksichtigt wird.

Die Ausgangsignale der Empfangsdioden hängen dabei von einer linearen Kombination von Sinus und Cosinus der Sagnac-Phase ab, sind somit periodisch. Eine eindeutige Bestimmung der Drehrate ist daher nur möglich, wenn der Betrag der Sagnac-Phase kleiner als 180° ist.

Die Sagnac-Phase ist nun ihrerseits proportional abhängig von dem Produkt aus Faserradius und Faserlänge des Lichtleiters, so daß auch entsprechend die Drehrate von diesem Produkt abhängt.

Will man kleine Drehraten messen, so wird man einen hohen Wert für dieses Produkt wählen, um eine hohe Empfindlichkeit des Faserkreisels zu erhalten. Aufgrund der erwähnten Periodizität der Ausgangssignale der Empfangsdioden wird dadurch jedoch der Meßbereich des Faserkeisels, in dem eindeutige Meßwerte erhalten werden, entsprechend klein.

Will man andererseits hohe Drehraten messen, d.h. den "eindeutigen" Meßbereich des Faserkreisels erweitern, wird man einen niedrigen Wert für das Produkt aus Faserradius und Faserlänge wählen. Die Konsequenz ist dann natürlich, daß die Empfindlichkeit des Faserkreisels für kleine Drehraten entsprechend gering ist.

Aus der US-A-4 283 144 ist ein Faserkreisel bekannt, mit dem Nullpunktsfehler kompensiert werden sollen, die insbesondere durch Temperaturschwankungen erzeugt werden. Um derartige Störeinflüsse erkennen und kompensieren zu können, werden gemäß dem US-Patent zwei Ausgänge einer Richtkoppleranordnung durch eine kurze Lichtleitfaser "kurzgeschlossen", die jedoch nicht der Messung der Drehrate dient, sondern zum Erfassen eines über den Kurzschluß ankommenden Nullpunktfehlersignales. Erst zeitlich danach wird das aus der Meßspule zurückkommende Signal detektiert, welches die Summe aus dem Meßsignal und dem Nullpunktfehlersignal ist, so daß aus einer Differenzbildung dann die fehlerfreie Drehrate ermittelt werden kann.

Hinzu kommt, daß bei diesem bekannten Faserkreisel die einzelnen Koppler sämtlich sogenannte 2 x 2-Koppler sind, d.h. Koppler, die zu beiden Seiten eines Koppelbereiches jeweils zwei Tore aufweisen. Mit derartigen Kopplern kann jedoch nicht eine Arbeitsweise nahe am Quadraturpunkt eingestellt werden, und zwar aufgrund einer inhärenten Phasenverschiebung von 90° in derartigen 2 x 2-Kopplern. Zum einen wird hierdurch die Mehrdeutigkeit der Meßsignale nicht ausgeräumt, zum zweiten hat die Meßsignal-Kennlinie bei kleinen Drehraten nur eine geringe Steigung im Sinne einer Cosinus-Funktion, so daß nur eine begrenzte Trennschärfe zwischen benachbarten Meßwerten erreicht werden kann.

Aus der JP-A-61-151415, Patent Abstract of Japan, Bd. 10, Nr. 351 (P-520), 2407, 27.11.86, ist ein Faserkreisel bekannt, der eine Hauptspule mit großer Länge und eine Hilfsspule mit kleiner Länge aufweist, die jeweils getaktet, d.h. nacheinander betrieben werden. Bei diesem Faserkreisel werden die nacheinander eintreffenden Signale in einem Rechner ausgewertet, was diese Auswertung recht aufwendig gestaltet. Da bei diesem Faserkreisel wiederum ein 3 x 3-Koppler verwendet wird, sind die obigen Nachteile nicht eliminiert.

Der Erfindung liegt die Aufgabe zugrunde, einen Faserkreisel der in Rede stehenden Art so zu konzipieren, daß dessen Meßbereich, in dem eindeutige Werte für die Drehrate erhalten werden, erweitert wird, so daß auch hohe Drehraten gemessen werden können, und daß gleichzeitig eine hohe Empfindlichkeit für geringe Drehraten gegeben ist.

Diese Aufgabe ist gemäß der Erfindung durch die im Patentanspruch 1 angegebenen Merkmale gelöst.

Demgemäß wird neben einer für die Bestimmung niedriger Drehraten vorgesehenen Faserspule eine zusätzliche Hilfsspule verwendet, in die Licht von der gleichen Lichtquelle eingekoppelt wird und die im Vergleich zu der Hauptspule eine unterschiedliche Länge und/oder einen unterschiedlichen Faserradius aufweist, wobei diese Werte für die Hilfsspule so ausgelegt sind, daß die Meßwerte über den gesamten zu erfassenden Drehratenbereich bis zu der maximalen Drehrate eindeutig sind. Durch die beiden Faserspulen werden somit unterschiedliche "eindeutige" Meßbereiche abgedeckt.

Da die Variation des Faserradius nur beschränkt möglich ist, läuft die Lehre gemäß der Erfindung im wesentlichen darauf hinaus, die Haupt- und Hilfsspule unterschiedlich lang zu gestalten.

Gemäß einer bevorzugten Ausführungsform der Erfindung wird für den Faserkreisel ein (4 x 4)-Koppler verwendet, der zu beiden Selten seines Koppelbereiches vier optische Tore aufweist. Die Haupt- und Hilfsspulen sind mit je zwei Toren auf einer Seite des Richtkopplers verbunden, während auf der anderen Seite ein Tor mit der Lichtquelle und die übrigen Tore mit je einem Empfänger verbunden sind. Für eine eindeutige Messung werden nur zwei Empfänger an zwei Toren benötigt, das Signal des dritten Empfängers kann zur Erhöhung der Meßgenauigkeit bzw. für Kontrollzwecke verwendet werden.

Weitere Ausgestaltungen der Erfindung gehen aus den Unteransprüchen hervor.

Die Erfindung ist in einem Ausführungsbeispiel anhand der Zeichnung näher erläutert. In dieser stellen dar:

Fig. 1    eine schematische Darstellung eines Faserkreisels gemäß der Erfindung mit einer Lichtquelle, einem (4 x 4)-Koppler, einer Faserspulenanordnung aus einer Haupt- und einer Hilfsspule sowie mit drei Empfängern;

Fig. 2    ein Signaldiagramm der Empfangssignale;

Fig. 3    ein Signaldiagramm der Empfangssignale eines Faserkreisels bei fortgelassener Hauptspule und

Fig. 4    ein Signaldiagramm der Empfangssignale bei fortgelassener Hilfsspule.

Ein Faserkreisel 1 weist einen (4 x 4)-Richtkoppler 2 auf, der auf seinen beiden Seiten je vier Tore 3,4,5,6 bzw. 7,8,9,10 aufweist, die über einen Koppelbereich 11 des Richtkopplers 2 miteinander verbunden sind. Mit den Toren 3,4,5 und 6 sind eine Lichtquelle 21 und drei Empfangsdioden 22, 23 und 24 verbunden. Die Tore 4 und 5 für die beiden Empfangsdioden 22 und 23 liegen auf gegenüberliegenden Seiten des mit der Lichtquelle 21 verbundenen Tores 3, wohingegen das Tor 6 für die dritte Empfangsdiode 24 zwischen den Toren 3 und 4 liegt.

Die Lichtquelle 21 sendet vorzugsweise unpolarisiertes Licht in einem breitbandigen Frequenzbereich aus. Dieses Licht wird in dem Koppelbereich 11 gleichmäßig auf die beiden Tore 7 und 8 aufgeteilt, mit denen die beiden Enden einer Hauptspule 31 einer langen Monomode-Lichtfaser 32 verbunden sind, so daß die aufgespaltenen Lichtanteile die Hauptspule 31 gegensinnig durchlaufen. Das die Hauptspule 31 durchlaufende Licht tritt durch die Tore 7 und 8 wiederum in den Lichtkoppler 2 ein und interferiert in dem Koppelbereich 11 miteinander. Das Interferenz-Signal wird zu den Empfangsdioden 22, 23 und 24 geleitet, aus deren Ausgangssignalen die Drehrate des Faserkreisels bestimmt wird.

Die Länge und der Durchmesser der Lichtleitfaser 32 ist dabei so bemessen, daß der Faserkreisel eine hohe Empfindlichkeit für geringe Drehraten hat.

Ein weiterer Teil des über das Tor 3 dem Richtkoppler 2 zugeführten Lichtes wird aus den zum Tor 9 und zum Tor 8 führenden Lichtanteilen ausgekoppelt und einer zweiten Faserspule 41 aus einer Lichtleitfaser 42 zugeführt, die im folgenden als Hilfsspule bezeichnet wird. Das Licht durchläuft diese Hilfsspule 41 ausgehend von den Toren 9 und 10 ebenfalls gegensinnig und interferiert im Koppelbereich 11 miteinander, wobei dieses Interferenz-Licht von den gleichen Empfangsdioden 22,23 und 24 registriert wird. Die Hilfsspule 41 ist vorzugsweise aus einer Monomode-Faser geringer Länge und/oder geringen Durchmessers gewickelt. Diese Dimensionen sind so gewählt, daß die in der Hilfsspule entstehende Sagnac-Phase auch bei einer maximal vorgesehenen hohen Drehrate einen geringeren Phasenwinkel als $\pm$ 180° aufweist. Damit bleibt das Meßsignal in dem vorgesehenen Meßbereich eindeutig. Die von der Hilfsspule 41 entwickelten Signale bilden, da die Empfangsdioden für beide Faserspulen 31 und 41 gemeinsam sind, einen zusätzlichen Signalanteil in den Empfangssignalen der Empfangsdioden 22,23 und 24. Aufgrund der unterschiedlichen Faserlängen und/oder Faserradien der beiden Spulen und der geringen Kohärenzlänge der breitbandigen Lichtquelle 21 interferieren die Signale der Haupt- und Hilfsspule 31 bzw. 41 getrennt voneinander. Das Ausgangssignal an den Empfangsdioden 22,23 und 24 besteht daher aus der Summe der Intensitäten, die sich aus den getrennten Interferenz- bzw. Sagnac-Signalen der beiden Spulen einzeln ergeben.

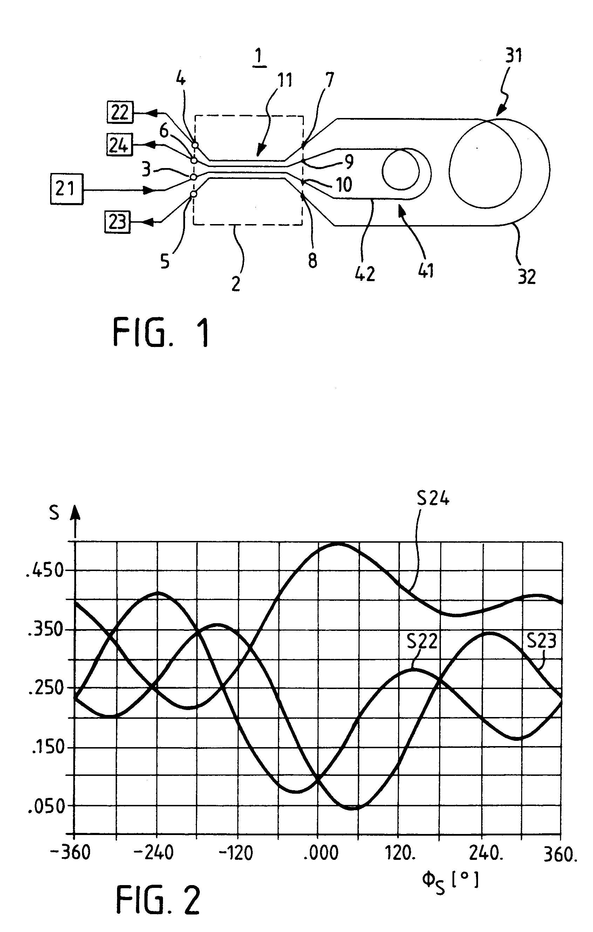

In Fig. 2 sind die Ausgangssignale $S_{22}$, $S_{23}$ und $S_{24}$ der Dioden 22, 23 und 24 als Funktion der Sagnac-Phase aufgetragen. Hierbei war das Produkt aus Faserradius und Faserlänge der Hilfsspulen 41 halb so groß wie dasjenige der Hauptspule 31. Der verwendete (4 x 4)-Koppler hatte Koppelkonstanten $K_{ij}$ mit einer Kop-

pellänge L, die eine Betriebsweise nahe am Quadraturpunkt ermöglichten. Die einzelnen Koppelkonstanten waren dabei folgendermaßen gewählt, wobei durch die Indizes i und j die jeweiligen Bezugszeichen für die Tore des Lichtkopplers verwendet wurden:

$$K_{37}L \ = \ K_{38}L \ = \ K_{67}L \ = \ K_{68} \ = \ K_{48}L \ = \ pi/6$$
$$K_{33}L \ = \ pi/12$$

Man sieht aus Fig. 2, daß die kombinierten Signale der Empfangsdioden 22 und 23 an keiner Stelle im gesamten Meßbereich zwischen $\pm 360°$ mehrdeutig sind. Das Ausgangssignal $S_{24}$ der Empfangsdiode 24 kann zur Erhöhung der Meßgenauigkeit bzw. für Kontrollzwecke ausgewertet werden.

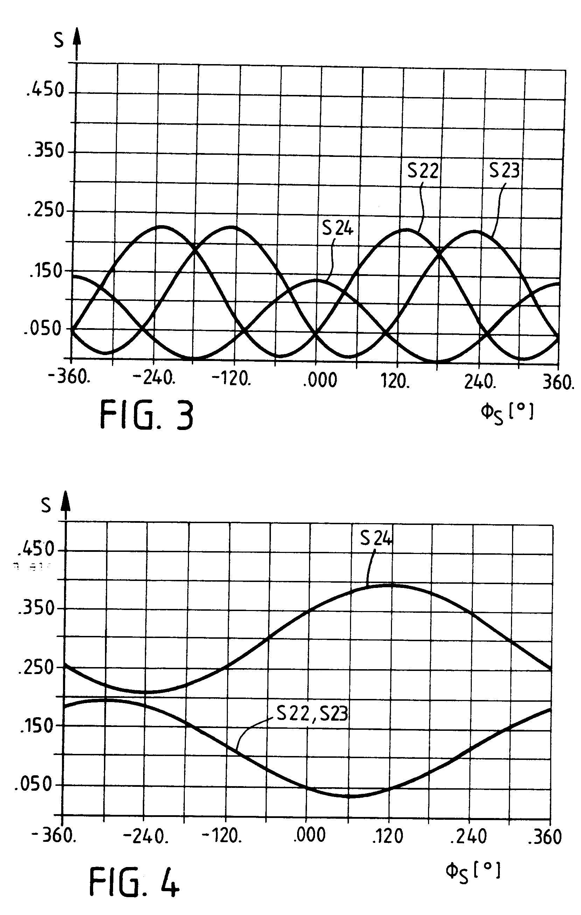

In den Figuren 3 und 4 sind die Ausgangssignale $S_{22}$, $S_{23}$ und $S_{24}$ der Empfangsdioden 22, 23 und 24 für einen beschriebenen Faserkreisel ohne Hauptspule 31 bzw. ohne Hilfsspule 41 dargestellt. Bei einem Vergleich mit dem Signaldiagramm gemäß Fig. 2 sieht man, daß der Meßbereich bis $\pm 180°$ der Sagnac-Phase erst durch eine Kombination zweier Faserspulen eindeutige Meßwerte liefert.

Bei den Signaldiagrammen gemäß Fig. 2 bis 4 war der Skalenfaktor der Hilfsspule, d.h. das Produkt aus Faserradius und Faserlänge 1/2 des Skalenfaktors der Hauptspule. Um eine Erhöhung des eindeutigen Meßbereiches auch bei Sagnac-Winkeln zu erreichen, die ein ganzzahliges Mehrfaches (n-faches) des Phasenwinkels von 180° betragen, wird der Skalenfaktor der Hilfsspule auf den n-ten Teil der Hauptspule festgelegt. Die Ausgangssignale $P_i$ der Empfangsdioden 22, 23 und 24 hängen dann von der Sagnac-Phase $Phi_S$ der Hauptspule ab, entsprechend:

$$P_i \ = \ a_i \ + \ b_i \cos (Phi_S \ + \ c_i) \ + \ d_i \cos (Phi_S/n \ + \ e_i)$$

mit i = 1,2,3, wobei der Koeffizient 1 der Empfangsdiode 22, der Koeffizient 2 der Empfangsdiode 23 und der Koeffizient 3 der Empfangsdiode 24 zugeteilt ist. Die Koeffizienten $a_i$, $b_i$, $c_i$, $d_i$ und $e_i$ hängen hierbei von den oben erwähnten Kopplungskonstanten $K_{ij}$ des (4 x 4)-Kopplers ab. Wesentlich ist die funktionale Abhängigkeit $Phi_{S/n}$, die die Eindeutigkeit in den jeweilig mit n multiplizierten Winkelbereichen von 180° garantiert.

Im Vorhergehenden wurde erwähnt, daß der Richtkoppler einen durch Schmelzen von Lichtleitfasern erzeugten Koppelbereich aufweist. Selbstverständlich sind andere Ausführungen von Richtkopplern möglich. Als Beispiel sei auf die US-PS 4 707 062 oder die DE-OS 2 938 526 verwiesen.

## Patentansprüche

1. Faserkreisel vom Sagnac-Typ, mit einer Lichtquelle, mit einer Faserspule aus einer Lichtleitfaser und mit einer Empfängeranordnung, die alle mit Anschlüssen eines Richtkopplers verbunden sind, derart, daß das Licht der Lichtquelle in die beiden Enden der Faserspule eingespeist wird und diese gegensinnig durchläuft, das aus den Enden der Faserspule austretende Licht in dem Richtkoppler miteinander interferiert und das Interferenz-Licht mit einer Empfängeranordnung aufgenommen wird, wobei der Faserkreisel zumindest eine weitere Faserspule (Hilfsspule) mit einer zugehörigen Empfängeranordnung aufweist und die Länge und/oder der Radius der Lichtleiterfasern von Haupt- und Hilfsspule unterschiedlich sind, dadurch gekennzeichnet, daß der Richtkoppler ein 4 x 4-Koppler (2) mit jeweils vier Toren (3 bis 6 bzw. 7 bis 10) zu beiden Seiten eines Koppelbereiches 11 ist, daß mit den Toren auf der einen Seite des Richtkopplers die breitbandiges Licht abgebende Lichtquelle (21) und zumindest zwei Empfänger (22, 23, 24) und mit jeweils unterschiedlichen Toren auf der anderen Seite Haupt- und und Hilfsspule (31, 41) verbunden sind, und daß die Hilfsspule (41) im Vergleich zu der Hauptspule (31) eine unterschiedliche Länge und/oder einen unterschiedlichen Faserradius aufweist, wobei diese Werte für die Hilfsspule so ausgelegt sind, daß die Meßwerte über den gesamten zu erfassenden Drehratenbereich bis zu der maximalen Drehrate eindeutig sind.

2. Faserkreisel nach Anspruch 1, dadurch gekennzeichnet, daß das Produkt aus Länge der Lichtleitfaser (32) und Faserradius der Hauptspule (31) ein ganzzahliges Vielfaches des entsprechenden Produktes der Hilfsspule (41) ist.

3. Faserkreisel nach Anspruch 1 oder 2, dadurch gekennzeichnet, daß der 4 x 4-Richtkoppler (2) durch Verschmelzen von Monomode-Fasern gebildet ist.

4. Faserkreisel nach einem der vorhergehenden Ansprüche, dadurch gekennzeichnet, daß Haupt- und Hilfsspule (31, 41) aus Monomode-Lichtleitfasern (32, 42) gebildet sind.

5. Faserkreisel nach einem der vorhergehenden Ansprüche, dadurch gekennzeichnet, daß mit dem Richtkoppler (2) auf der Seite der Lichtquelle (21) drei Empfänger (22, 23, 24) mit jeweils einem Tor (4, 5, 6)

EP 0 412 309 B1

verbunden sind.

## Claims

1. Sagnac-type fibre gyro, comprising a light source, a fibre coil of an optical fibre and a receiver arrangement, all of which are connected to connections of a directional coupler in such a manner that the light of the light source is fed into both ends of the fibre coil and passes through the latter in opposite directions, that light exiting from the ends of the fibre coil interferes with each other in the directional coupler, and the interference light is picked up by a receiver arrangement, wherein the fibre gyro comprises at least one additional fibre coil (auxiliary coil) with an associated receiver arrangement and the length and/or the radius of the optical fibres of main and auxiliary coil differs, **characterised in that** the directional coupler is a 4x4 coupler (2) with four respective gates (3 to 6 or 7 to 10 respectively) at both sides of a coupling area (11), that the gates connect on the one side of the directional coupler the broadbanded light emitting light source (21) and at least two receivers (22, 23, 24) and with respective different gates on the other side main and auxiliary coil (31, 41), and that the auxiliary coil (41) has a different length and/or a different fibre radius relative to the main coil (31), and that these values for the auxiliary coil are laid out in such a manner that the measuring values are clear over the entire rotary range to be detected up to the maximum rotation.

2. Fibre gyro according to claim 1, **characterised in that** the product of length of the optical fibre (32) and fibre radius of the main coil (31) is an integer multiple of the corresponding product of the auxiliary coil (41).

3. Fibre gyro according to claim 1 or 2, **characterised in that** the 4x4 directional coupler (2) is formed by fusion of monomode fibres.

4. Fibre gyro according to one of the above claims, **characterised in that** the main and auxiliary coil (31, 41) is made of monomode optical fibres (32, 42).

5. Fibre gyro according to one of the above claims, **characterised in that** the directional coupler (2) is connected on the one side of the light source (21) to three receivers (22, 23, 24) with each a respective gate (4, 5, 6).

## Revendications

1. Gyromètre à fibre optique, de type Sagnac, comportant une source de lumière, un enroulement de fibre optique et un dispositif récepteur qui sont tous reliés à des connecteurs d'un coupleur directif de manière telle, que la lumière provenant de la source de lumière est injectée aux deux extrémités de l'enroulement de fibre et parcourt celle-ci dans des directions opposées, que la lumière sortant des extrémités de l'enroulement de fibre est amenée en interférence réciproque à l'intérieur du coupleur directif et la lumière en interférence est captée par un dispositif récepteur, le gyromètre à fibre optique présentant au moins un enroulement de fibre supplémentaire (enroulement auxiliaire) avec un dispositif récepteur associé et la longueur et/ou le rayon des fibres optiques de l'enroulement principal et de l'enroulement secondaire étant différents, caractérisé par le fait que le coupleur directif est un coupleur 4 x 4 (2) avec respectivement quatre portes (3 à 6 et 7 à 10) de chaque côté d'une zone de couplage 11, par le fait que les portes de l'un des côtés du coupleur directif sont reliées à la source de lumière (21) qui émet de la lumière à large spectre et à au moins deux récepteurs (22, 23, 24) tandis que les enroulements principal et auxiliaire (31, 41) sont reliés à des portes différentes de l'autre côté, et par le fait que, par rapport à l'enroulement principal (31), l'enroulement auxiliaire (41) présente une longueur différente et/ou un rayon de fibre différent, ces grandeurs étant choisies pour l'enroulement auxiliaire de manière telle, que les valeurs de mesure soient univoques sur l'ensemble de la plage angulaire à mesurer jusqu'à la rotation maximale.

2. Gyromètre à fibre optique selon la revendication 1, caractérisé par le fait que le produit de la longueur et du rayon de la fibre optique (32) de l'enroulement principal (31) est un multiple entier du produit correspondant de l'enroulement auxiliaire (41).

3. Gyromètre à fibre optique selon la revendication 1 ou 2, caractérisé par le fait que le coupleur directif 4 x 4 (2) est formé par fusion de fibres monomodes.

4. Gyromètre à fibre optique selon l'une des revendications précédentes, caractérisé par le fait que l'enroulement principal (31) et l'enroulement auxiliaire (41) sont constitués par des fibres optiques (32, 42) monomodes.

5. Gyromètre à fibre optique selon l'une des revendications précédentes, caractérisé par le fait que, côté source de lumière (21), trois récepteurs (22, 23, 24) sont reliés chacun respectivement à une porte (4, 5, 6) du coupleur directif (2).

FIG. 1

FIG. 2

FIG. 3

FIG. 4